Europäisches Patentamt

European Patent Office

Office européen des brevets

(19)

(11) **EP 1 387 153 A1**

(12) **EUROPÄISCHE PATENTANMELDUNG**

(43) Veröffentlichungstag:
**04.02.2004 Patentblatt 2004/06**

(51) Int Cl.⁷: **G01G 19/08**, B60T 8/00

(21) Anmeldenummer: **03007252.4**

(22) Anmeldetag: **31.03.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **03.08.2002 DE 10235563**

(71) Anmelder: **ROBERT BOSCH GMBH
70442 Stuttgart (DE)**

(72) Erfinder:
• **Panzer, Markus
71636 Ludwigsburg (DE)**
• **Weippert, Hansjoerg
71125 Gaeufelden (DE)**

(54) **Verfahren und Vorrichtung zur Ermittlung der Fahrzeugmasse**

(57) Ein Verfahren zur Ermittlung eines die Fahrzeugmasse repräsentierenden Massenwertes eines Kraftfahrzeugs, insbesondere eines Nutzkraftfahrzeugs, mit einer Antriebseinheit, weist folgende Schritte auf:

- Erfassung wenigstens eines Beschleunigungswertes zu wenigstens einem Zeitpunkt, welcher die Fahrzeugbeschleunigung repräsentiert,
- Erfassung wenigstens eines Antriebswertes zu wenigstens einem Zeitpunkt, welcher die Antriebskraft oder das Antriebsmoment der Antriebseinheit repräsentiert,
- Erfassung wenigstens einer ersten und zweiten Höhe über Normalnull zu wenigstens einem ersten und wenigstens einem zweiten Zeitpunkt,
- Bestimmung einer Änderung der Fahrbahnneigung aus der Differenz der wenigstens einen ersten und der wenigstens einen zweiten Höhe über Normalnull und der zwischen dem wenigstens einen ersten und dem wenigstens einen zweiten Zeitpunkt zurückgelegten Wegstrecke,
- Bestimmung wenigstens eines Fahrwiderstandswertes unter Berücksichtigung der bestimmten Änderung der Fahrbahnneigung,
- Bestimmung der Gesamtmasse ausgehend von dem erfaßten Beschleunigungswert, dem erfaßten Antriebswert und des bestimmten Fahrwiderstandswertes.

Fig.

EP 1 387 153 A1

## Beschreibung

Stand der Technik

Die Erfindung betrifft ein Verfahren und eine Vorrichtung zur Ermittlung eines die Fahrzeugmasse repräsentierenden Massenwertes mit den Merkmalen der unabhängigen Ansprüche.

Aus der DE 42 28 413 A1 ist ein Verfahren und eine Vorrichtung zur Bestimmung der Gesamtmasse eines Fahrzeugs bekannt, bei der während eines Beschleunigungsvorgangs des Fahrzeugs die Fahrzeuglängsbeschleunigung und die zugehörigen Anbzw. Vortriebskräfte zu zwei unterschiedlichen kurz hintereinander folgenden Zeitpunkten gemessen werden. Abhängig von diesen Meßgrößen wird die Fahrzeugmasse ermittelt. Hierbei wird davon ausgegangen, daß sich der Fahrwiderstand während der Massenbestimmung, beispielsweise durch eine Änderung der Fahrbahnneigung, nicht wesentlich ändert.

Die DE 197 28 867 A1 offenbart ein Verfahren und eine Vorrichtung zur Ermittlung der Fahrzeugmasse. Hierbei wird von wenigstens zwei Beschleunigungswerten ausgegangen, welche die Fahrzeugbeschleunigung zu einem ersten und einem zweiten Zeitpunkt repräsentieren. Es werden wenigstens ein erster und ein zweiter Antriebswert erfaßt, wobei diese Antriebswerte die Antriebskraft oder das Antriebsmoment der Antriebseinheit zu dem ersten und dem zweiten Zeitpunkt repräsentieren. Abhängig von den erfaßten Beschleunigungswerten und den erfaßten Antriebswerten werden dann wenigstens ein erster und ein zweiter Fahrwiderstands- oder Massenschätzwert bestimmt. Der Massenwert wird abhängig von einem Vergleich des bestimmten ersten Fahrwiderstands- oder Massenschätzwerts mit dem bestimmten zweiten Fahrwiderstands- oder Massenschätzwert ermittelt. Durch diesen Vergleich kann eine Fahrbahnneigung geschätzt werden.

Der Erfindung liegt die Aufgabe zugrunde, ein Verfahren und eine Vorrichtung zur Ermittlung der Fahrzeugmasse der eingangs beschriebenen Art so weiterzubilden, daß eine Massenbestimmung insbesondere auch bei geneigter Fahrbahn mit technisch einfachen Mitteln mit hoher Präzision möglich ist.

Vorteile der Erfindung

Diese Aufgabe wird durch die Merkmale der unabhängigen Ansprüche gelöst.

Die Ermittlung der Fahrzeugmasse beruht auf einer Erfassung wenigstens eines Beschleunigungswertes zu wenigstens einem Zeitpunkt, welcher die Fahrzeugbeschleunigung repräsentiert, der Erfassung wenigstens eines Antriebswertes zu wenigstens einem Zeitpunkt, welcher die Antriebskraft oder das Antriebsmoment der Antriebseinheit repräsentiert, die Erfassung wenigstens einer ersten und wenigstens einer zweiten Höhe über Normalnull zu wenigstens einem ersten und wenigstens einem zweiten Zeitpunkt, der Bestimmung einer Änderung der Fahrbahnneigung aus der Differenz der wenigstens einen ersten und der wenigstens einen zweiten Höhe über Normalnull und der zwischen dem wenigstens einen ersten und dem wenigstens einen zweiten Zeitpunkt zurückgelegten Wegstrecke, der Bestimmung wenigstens eines Fahrwiderstandswertes unter Berücksichtigung der bestimmten Änderung der Fahrbahnneigung und die Ermittlung des Massenwertes ausgehend von dem erfaßten Beschleunigungswert, dem erfaßten Antriebswert sowie dem bestimmten Fahrwiderstandswert.

Grundidee der Erfindung ist es, die Änderung der Fahrbahnneigung, insbesondere eine Steigung, bei der Bestimmung der Fahrzeugmasse zu berücksichtigen. Bei Befahren einer Steigung geht nämlich als wesentliche Größe in den Fahrwiderstandswert die Hangabtriebskraft ein, die ihrerseits von der Fahrzeugmasse und dem Winkel, unter dem die Fahrbahn zur Horizontalen geneigt ist, abhängt.

Kern der Erfindung ist es ferner, die Neigung aus der Höhendifferenz und einer zurückgelegten Wegstrecke zwischen den unterschiedlichen Höhen zu bestimmten.

Die Höhendifferenz wird dabei bei einem sehr vorteilhaften Ausführungsbeispiel durch die Erfassung wenigstens eines ersten und wenigstens eines zweiten Umgebungsluftdrukkes zu dem wenigstens einen ersten und dem wenigstens einen zweiten Zeitpunkt und Bildung der Differenz dieser Umgebungsluftdrücke ermittelt. Dies ist deshalb besonders vorteilhaft, weil zur Motorsteuerung von Kraftfahrzeugen ohnehin der Umgebungsluftdruck mittels Atmosphärendruckfühlern oder dergleichen bestimmt wird und so zusätzliche Sensoren nicht erforderlich sind.

Bei einer anderen sehr vorteilhaften Ausführungsform, bei der sogar auf Atmosphärendruckfühler verzichtet werden kann, wird die Höhendifferenz ermittelt durch Erfassung von GPS-Positionsdaten des Kraftfahrzeugs zu dem wenigstens einen ersten und dem wenigstens einen zweiten Zeitpunkt.

Zeichnung

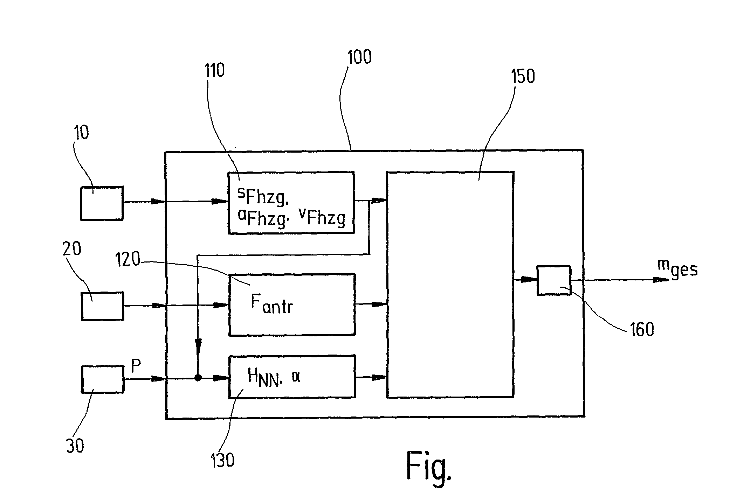

Weitere Vorteile und Merkmale der Erfindung werden nachstehend in Verbindung mit der Zeichnung erläutert.

In der einzigen Figur ist ein Übersichtsblockschaltbild einer von der Erfindung Gebrauch machenden Vorrichtung schematisch dargestellt.

Beschreibung eines Ausführungsbeispiels

Das Verfahren zur Ermittlung eines die Fahrzeugmasse repräsentierenden Massenwertes $m_{ges}$ wird nachfolgend in Verbindung mit der in der Figur dargestellten Vorrichtung beschrieben.

Zur Erfassung kinematischer Größen, wie z.B.

der Beschleunigung a, der Geschwindigkeit v oder der zurückgelegten Wegstrecke s, sind Erfassungsmittel beispielsweise in Form von Raddrehzahlsensoren 10, welche die Drehgeschwindigkeiten der Fahrzeugräder erfassen, vorgesehen. Die Raddrehzahlsignale werden einem Block 110 einer als Ganzes mit 100 bezeichneten Steuereinrichtung zugeführt. In der Berechnungseinheit 110 werden aus den Raddrehzahlsignalen die Beschleunigung $a_{Fhzg}$ die Geschwindigkeit $V_{Fhzg}$ sowie eine zurückgelegte Wegstrecke $S_{Fhzg}$ ermittelt und einer Berechnungseinheit 150, die ebenfalls Teil der Steuereinrichtung 100 ist, sowie einer weiter unten noch näher zu erläuternden Berechnungseinheit 130 zugeführt.

Ferner sind Erfassungsmittel 20 zur Erfassung beispielsweise des Motormoments der Brennkraftmaschine des Fahrzeugs vorgesehen, deren Ausgangssignale einem Block 120 zugeführt werden, in dem eine Antriebskraft $F_{antr}$ berechnet wird. Der Wert der Antriebskraft $F_{antr}$ wird ebenfalls der Berechnungseinheit 150 zugeführt.

Schließlich ist ein Erfassungsmittel 30 vorgesehen zur Erfassung der aktuellen Höhe über Normalnull $H_{NN}$, die in der Berechnungseinheit 130 aus einem erfaßten Druckwert p berechnet wird. Der Drucksensor kann beispielsweise ein ohnehin für die Motorsteuerung verwendeter Atmosphärendruckfühler sein.

Statt der Verwendung eines Drucksensors und der Berechnung der Höhe über Normalnull $H_{NN}$ aus dem erfaßten Luftdruckwert kann auch vorgesehen sein, GPS-Daten zu verwenden, aus denen die Höhe unmittelbar durch Bestimmung der Position des Fahrzeugs entnehmbar ist. Die Höhe $H_{NN}$ wird zu unterschiedlichen Zeitpunkten berechnet. Aus der Differenz der Höhe über Normalnull $H_{NN}$ zu jeweils diesen Zeitpunkten und der zwischen diesen Zeitpunkten zurückgelegten Wegstrecke wird in der Berechnungseinheit 130 eine Änderung der Fahrbahnneigung, das heißt ein Winkel $\alpha$ gegenüber dem die Fahrbahn zur Horizontalen geneigt ist, ermittelt. Der ermittelte Wert der Fahrbahnneigung wird ebenfalls der Berechnungseinheit 150 zugeführt. In der Berechnungseinheit 150 wird sodann aus den kinematischen Größen, Beschleunigung, zurückgelegte Wegstrecke sowie der Antriebskraft und einer Fahrwiderstandskraft unter Berücksichtigung der Fahrbahnneigung eine Fahrzeuggesamtmasse $m_{ges}$ berechnet und nach Prüfung in einen Verifizierungslogikbaustein 160, in dem geprüft wird, ob der ermittelte Wert der Fahrzeuggesamtmasse, innerhalb vorgebbaren Schranken liegt, für weitere Steuerzwecke ausgegeben.

Die Bestimmung der Gesamtmasse des Fahrzeugs $m_{ges}$ erfolgt gemäß folgender Kraftbilanz:

$$m_{ges} * a_{Fhzg} = F_{antr} - F_w$$

Hierbei bedeuten $m_{ges}$ die Fahrzeuggesamtmasse

$a_{Fhzg}$ die Fahrzeugbeschleunigung
$F_{antr}$ die Antriebskraft und
$F_w$ die Fahrwiderstandskraft.

Die Fahrwiderstandskraft setzt sich ihrerseits zusammen aus einer Rollwiderstandskraft, einer Luftwiderstandskraft, einer Kraft zur Beschleunigung rotierender Massen (Räder, Getriebe, ...) und einer Hangabtriebskraft. Die Rollwiderstandskraft, die Luftwiderstandskraft sowie die Kraft zur Beschleunigung rotierender Massen können aus bekannten Fahrzeugdaten sowie kinematischen Daten berechnet werden, wie es beispielsweise aus der DE 197 28 867 A1, S.3, Z.49 bis S. 4, Z.10 hervorgeht, auf die in dieser Hinsicht Bezug genommen wird und deren Inhalt hiermit in diese Anmeldung aufgenommen wird.

Die Antriebskraft kann aus dem erfaßten Motormoment auf an sich bekannte Weise bestimmt werden. Die Bestimmung geht beispielsweise aus der DE 197 28 867 A1, S.4, Z.55 bis S.5, Z.31 hervor, auf die in dieser Hinsicht Bezug genommen wird.

Die Hangabtriebskraft $F_{Hang}$, welche wesentlich in den Wert der Widerstandskraft $F_w$ eingeht, berechnet sich gemäß folgender Formel:

$$F_{Hang} = m_{ges} * g * \sin\alpha$$

wobei g die Erdbeschleunigung und $\alpha$ der Neigungswinkel gegenüber der Horizontalen bedeuten.

Die Hangabtriebskraft wird auf folgende Weise berechnet. Es werden zu unterschiedlichen Zeitpunkten $t_1$ und $t_2$ jeweils die Luftdrücke $p_1$ und $p_2$ bestimmt und aus diesen Luftdrücken $p_1$, $p_2$ mittels der barometrischen Höhenformel jeweils eine Höhe über Normalnull $H_{NN1}$, $H_{NN2}$ bestimmt. Aus der Höhendifferenz $\Delta H_{NN} = H_{NN2} - H_{NN1}$ und der zwischen den beiden Zeiten $t_1$ und $t_2$ zurückgelegten Wegstrecke $s_{Fhzg}$, die als kinematische Größe in Block 110 berechnet wird, kann der Winkel $\alpha$ berechnet werden. Die Widerstandskraft $F_w$ kann damit dargestellt werden als die Summe einer Widerstandskraft $F'_w$, welche die zu vernachlässigende Rollwiderstandskraft, die Luftwiderstandskraft und die Kraft zur Beschleunigung rotierender Massen enthält, und der Hangabtriebskraft $F_{Hang}$

$$F_w = F'_w + F_{Hang} ,$$

mit

$$F'_w = F_{Roll} + F_{Luft} + F_{Rot}$$

Die Rollwiderstandskraft kann vorliegend vernachlässigt werden, die Luftwiderstandskraft und die Kraft zur Beschleunigung rotierender Massen können auf an sich bekannte Weise - wie oben erläutert - berechnet werden, sie hängen von der Gesamtmasse des Fahrzeugs nicht ab.

Damit ergibt sich für die Gesamtmasse des Fahrzeugs

$$m_{ges} = (F_{antr} - F'_w) / (a_{Fhzg} - g * \sin\alpha)$$

Wie dieser Gleichung zu entnehmen ist, wird die Änderung der Fahrbahnneigung, das heißt beispielsweise eine Steigung bei der Berechnung der Fahrzeuggesamtmasse $m_{ges}$ berücksichtigt.

Die Genauigkeit der Berechnung der Widerstandskraft $F'_w$ sowie der Hangabtriebskraft $F_{hang}$ kann wesentlich gesteigert werden durch wiederholte Messung der vorbeschriebenen Größen zu unterschiedlichen Zeiten und anschließender Mittelung. Durch eine wiederholte Messung, können auch Änderungen beispielsweise der Fahrbahnneigung, das heißt Änderungen der Steigung bestimmt und bei Berechnungen der Fahrzeuggesamtmasse $m_{ges}$ berücksichtigt werden.

Die Erfindung weist im wesentlichen folgende Vorteile auf:

Die Fahrzeugmasse wird während eines einfachen Beschleunigungsvorgangs ermittelt. Der erfindungsgemäße Algorithmus ist einfach applizierbar. Die Fahrbahnneigung wird exakt berücksichtigt unter Verwendung ohnehin vorhandener Atmosphärendrucksensoren oder durch Verwendung von GPS-Daten.

**Patentansprüche**

1. Verfahren zur Ermittlung eines die Fahrzeugmasse repräsentierenden Massenwertes eines Kraftfahrzeugs, insbesondere eines Nutzkraftfahrzeugs, mit einer Antriebseinheit, wobei folgende Schritte getätigt werden:

   - Erfassung wenigstens eines Beschleunigungswertes zu wenigstens einem Zeitpunkt, welcher die Fahrzeugbeschleunigung repräsentiert,
   - Erfassung wenigstens eines Antriebswertes zu wenigstens einem Zeitpunkt, welcher die Antriebskraft oder das Antriebsmoment der Antriebseinheit repräsentiert,
   - Erfassung wenigstens einer ersten und zweiten Höhe über Normalnull zu wenigstens einem ersten und wenigstens einem zweiten Zeitpunkt,
   - Bestimmung einer Änderung der Fahrbahnneigung aus der Differenz der wenigstens einen ersten und der wenigstens einen zweiten Höhe über Normalnull und der zwischen dem wenigstens einen ersten und dem wenigstens einen zweiten Zeitpunkt zurückgelegten Wegstrecke,
   - Bestimmung wenigstens eines Fahrwiderstandswertes unter Berücksichtigung der bestimmten Änderung der Fahrbahnneigung,
   - Bestimmung der Gesamtmasse ausgehend von dem erfaßten Beschleunigungswert, dem erfaßten Antriebswert und des bestimmten Fahrwiderstandswertes.

2. Verfahren nach Anspruch 1, **dadurch gekennzeichnet, daß** die Höhen über Normalnull durch Erfassung wenigstens eines ersten und wenigstens eines zweiten Umgebungsluftdruckes zu dem wenigstens einen ersten und dem wenigstens einen zweiten Zeitpunkt ermittelt werden.

3. Verfahren nach Anspruch 1, **dadurch gekennzeichnet, daß** die Höhen über Normalnull ermittelt werden durch Erfassung von GPS-Positionsdaten des Kraftfahrzeugs zu dem wenigstens einen ersten und dem wenigstens einen zweiten Zeitpunkt.

4. Vorrichtung zur Ermittlung eines die Fahrzeugmasse repräsentierenden Massenwertes eines Kraftfahrzeugs, insbesondere eines Nutzkraftfahrzeugs, mit einer Antriebseinheit, mit

   - ersten Erfassungsmitteln, mittels der wenigstens ein Beschleunigungswert, der die Fahrzeugbeschleunigung repräsentiert, erfaßt wird,
   - zweiten Erfassungsmitteln, mittels der wenigstens ein Antriebswert, der die Antriebskraft oder das Antriebsmoment der Antriebseinheit repräsentiert, erfaßt wird,
   - dritten Erfassungsmitteln, mittels der wenigstens ein erster und ein zweiter Wert der Höhe über Normalnull zu wenigstens einem ersten und wenigstens einem zweiten Zeitpunkt erfaßt werden,
   - Mittel zur Bestimmung einer Änderung der Fahrbahnneigung aus der Differenz der wenigstens einen ersten und der wenigstens einen zweiten Höhe über Normalnull und der zwischen dem wenigstens einen ersten und dem wenigstens einen zweiten Zeitpunkt zurückgelegten Wegstrecke,
   - Mittel zur Bestimmung eines Fahrwiderstandswertes unter Berücksichtigung der bestimmten Änderung der Fahrbahnneigung und
   - Mittel zur Berechnung der Fahrzeuggesamtmasse auf der Basis der erfaßten Fahrzeugbeschleunigung, der erfaßten Antriebskraft, sowie des bestimmten Fahrwiderstandes.

5. Vorrichtung nach Anspruch 4, **dadurch gekennzeichnet, daß** die dritten Erfassungsmittel durch wenigstens einen Drucksensor gebildet werden.

6. Vorrichtung nach Anspruch 4, **dadurch gekennzeichnet, daß** die dritten Erfassungsmittel durch ein GPS-System gebildet werden.

Fig.

**Europäisches Patentamt**

## EUROPÄISCHER RECHERCHENBERICHT

Nummer der Anmeldung

EP 03 00 7252

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 44 46 358 C (KNORR BREMSE SYSTEME) 7. Dezember 1995 (1995-12-07) * Spalte 10, Zeile 9 - Zeile 30 * --- | 1-6 | G01G19/08 B60T8/00 |
| P,X | WO 03 023334 A (NELLES OLIVER ;SIEMENS AG (DE)) 20. März 2003 (2003-03-20) * Seite 2, Zeile 21 - Seite 3, Zeile 25 * --- | 1-6 | |
| E | WO 03 029764 A (BAYERISCHE MOTOREN WERKE AG ;FLECHTNER HORST (DE); PAULY AXEL (DE)) 10. April 2003 (2003-04-10) * Seite 5, Zeile 16 - Seite 6, Zeile 9 * * Seite 14, Zeile 8 - Zeile 18 * --- | 1-6 | |
| A,D | DE 197 28 867 A (BOSCH GMBH ROBERT) 7. Januar 1999 (1999-01-07) * das ganze Dokument * ----- | 1,4 | |

|  |  |  | RECHERCHIERTE SACHGEBIETE (Int.Cl.7) |
|---|---|---|---|
|  |  |  | G01G B60T |

Der vorliegende Recherchenbericht wurde für alle Patentansprüche erstellt

| Recherchenort | Abschlußdatum der Recherche | Prüfer |
|---|---|---|
| DEN HAAG | 13. November 2003 | Ganci, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................
& : Mitglied der gleichen Patentfamilie, übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**

EP 03 00 7252

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 4446358 | C | 07-12-1995 | DE | 4446358 C1 | 07-12-1995 |
| WO 03023334 | A | 20-03-2003 | WO | 03023334 A1 | 20-03-2003 |
| WO 03029764 | A | 10-04-2003 | DE | 10148091 A1 | 17-04-2003 |
| | | | WO | 03029764 A1 | 10-04-2003 |
| DE 19728867 | A | 07-01-1999 | DE | 19728867 A1 | 07-01-1999 |
| | | | FR | 2765682 A1 | 08-01-1999 |
| | | | JP | 11072372 A | 16-03-1999 |
| | | | US | 6314383 B1 | 06-11-2001 |

EPO FORM P0461

Für nähere Einzelheiten zu diesem Anhang : siehe Amtsblatt des Europäischen Patentamts, Nr.12/82